# EUROPEAN PATENT SPECIFICATION

(11) **EP 3 604 132 B1**
(45) Date of publication and mention of the grant of the patent: **25.05.2022**
(21) Application number: 19185660.8
(22) Date of filing: 11.07.2019
(51) Int. Cl.: B64C 39/02, B64C 39/04, B64C 39/12

(54) **HYBRID VERTICAL TAKE-OFF AND LANDING (VTOL) FIXED-WING DRONE**
HYBRIDE SENKRECHT STARTENDE UND LANDENDE (VTOL) FESTFLÜGELDROHNE
DRONE ADAV HYBRIDE À VOILURE FIXE

(30) Priority: 30.07.2018 US 201816049629
(43) Date of publication of application: 05.02.2020
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- GB-A- 2 468 787
- US-A1- 2006 151 666
- US-A1- 2012 012 692
- US-A1- 2016 236 774
- US-A1- 2016 311 526
- US-B1- 6 293 491
- US-B1- 9 944 386
- US-S1- D 822 579
- Alan Levin: "Dream of Flying Drone Taxis Moves One Step Closer to Reality - Bloomberg", , 28 April 2018 (2018-04-28), pages 1-5, XP055759024, www.bloomberg.com Retrieved from the Internet: URL:https://web.archive.org/web/2018042800 5758/https://www.bloomberg.com/news/articl es/2018-04-27/dream-of-flying-drone-taxis- moves-one-step-closer-to-reality [retrieved on 2020-12-10]

## Description

### FIELD OF THE DISCLOSURE

The field of the disclosure is aircrafts in general and hybrid VTOL (Vertical Take-Off and Landing) fixed-wing drones specifically.

### BACKGROUND OF THE DISCLOSURE

Drones, whether manned or unmanned, have been proposed to conduct various missions and functions. Their missions and functions, however, are often limited by the traveling range and endurance of the drone. There is a continuing need for a drone that is sufficiently efficient to travel longer distances.

There is also a continuing need for new ways of creating redundancy in a drone so that when one propeller fails, the drone may still function and continue to stay in the air. US 6 293 491 B1 relates to a vertical take-off and landing (VTOL) aircraft having a plurality of rotors for producing downthrust and drive thrust. US 2006/ 151 666 A1 relates to a VTOL propulsion system with at least one forward thruster, a power source used for both the VTOL propulsion system and forward thruster, fore and aft wings and a plurality of spars attached to and spanning the space between the two wings. The VTOL propulsion system includes a plurality of VTOL cells (including a motor, motor controller, and propeller) attached in a spaced relation along each spar. US 2012/ 012 692 A1 relates to an aircraft configuration with multiple vertical lift rotors, tandem wings, and forward thrust propellers. US 9 944 386 B1 relates to an aircraft, which includes a plurality of rotors and a fuselage. US D822,579 relates to an ornamental design for a three-surface aircraft.

### BRIEF SUMMARY OF THE DISCLOSURE

In one aspect a fixed wing drone is defined according to claim 1. Further aspects are defined by the dependent claims 2 to 4.

Various objects, features, aspects and advantages of the present embodiment will become more apparent from the following detailed description of embodiments of the embodiment, along with the accompanying drawings in which like numerals represent like components.

### BRIEF DESCRIPTION OF THE DRAWINGS

It should be noted that the drawing figures may be in simplified form and might not be to precise scale. In reference to the disclosure herein, for purposes of convenience and clarity only, directional terms such as top, bottom, left, right, up, down, over, above, below, beneath, rear, front, distal, and proximal are used with respect to the accompanying drawings. Such directional terms should not be construed to limit the scope of the embodiment in any manner.
Fig. 1 is a top front perspective view of an embodiment of the contemplated drone utilizing a canard design having two parallel linear supports to connect the forewings with the main wings.
Fig. 2 is a top perspective view of an embodiment of the contemplated drone.
Fig. 3 is a bottom perspective view of an embodiment of the contemplated drone.
Fig. 4 is a top view of one embodiment of the contemplated drone.
Fig. 5 is a bottom view of one embodiment of the contemplated drone.
Fig. 6 is a direct frontal view of one embodiment of the contemplated drone.
Fig. 7 is direct rear view of one embodiment of the contemplated drone.
Fig. 8 is a right side view of one embodiment of the contemplated drone.
Fig. 9 is a top view of another aspect of the contemplated drone, illustrating spatial relationships of the propellers to each other, and explains the center of gravity of the drone.

### DETAILED DESCRIPTION OF THE EMBODIMENTS

The drone and its various aspects can now be better understood by turning to the following detailed description of the embodiments, which are presented as illustrated examples of the embodiment defined in the claims. It is expressly understood that the embodiment as defined by the claims may be broader than the illustrated embodiments described below.

Many alterations and modifications may be made by those having ordinary skill in the art without departing from the scope of the embodiment. Therefore, it must be understood that the illustrated embodiment has been set forth only for the purposes of example and that it should not be taken as limiting the embodiment as defined by the following claims.

The words used in this specification to describe the embodiment and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

As used herein, the terms "failure" and "malfunction" in conjunction with a propeller refer to a condition where the propeller cease to function properly as intended by its manufacturer due to reasons outside of its control. For example, a propeller may fail or malfunction when it is damaged by an outside force. Propellers in a drone are known to be damaged when it collides with a bird, a tree, or a building. A propeller may also fail or malfunction when its mechanical or electrical a material component experience a break down. Also, a propeller may fail or malfunction when its power supply or fuel supply ceases to supply energy to the propeller when such supply of energy is expected.

As used herein, the term "center of gravity" in conjunction with the drone refers to a center of gravity in consideration of the total weight of the drone including all of its components, fuel (if any), and its payload. For example, if the drone is contemplate to carry cargo or human, the weight of the cargo and/or human would be part of the calculation in designing where the center of gravity should be.

As used herein, the term "range of motion" in conjunction with the propeller refers to a circular area having a radius equal to the length of the propeller's blade. Since the blade of the propeller is designed to rotate either in a clockwise or counter-clockwise along a plane, the range of motion can also be described as a circular area along a plane.

As used herein, the term "overlap" in conjunction with the range of motions of propellers refers to a visual appearance that two circular areas have certain portions touching each other, but does not mean physical touching. That is, when two ranges of motions "overlap," they do not mean physically overlapping each other. When two ranges of motions "overlap," they merely appear to be in each other's space when looking from a particular angle. This overlaps may or may not necessarily create interference in fluid dynamics and aerodynamics of the two adjacent propellers.

As used herein, the term "hybrid" in conjunction with fixed-wing VTOL drone design refers to the classification of aircraft type, and does not refer to its power train. In the disclosure here, the term "hybrid" refers to the fact that the contemplated drone is a fixed-wing aircraft and at the same time has propellers so that the drone can vertically take-off and land (VTOL). In terms of power train, the contemplated embodiments can use entirely electric power train, a fuel-powered power train, a combination of both, or any other known or yet to be known power train technology.

As used herein, the term "drone" refers to any manned or unmanned aircraft, of various sizes. For example, contemplated drones as disclosed herein can have a wingspan of less than 0.5 meter, and can have a cabin space sufficiently large to seat passenger(s). The term "drone" as used herein can or cannot be limited to unmanned aerial vehicles (UAV).

As used herein, the term "vertical" in conjunction with a stabilizer refers to any angle. In one embodiment, it is at a 90 degree angle, perpendicular to the horizontal plane of the main wings. In other embodiments, it can be at a tilted angle.

The inventor has discovered a novel hybrid VTOL fixed-wing drone design that can drastically improve at least one of the following characteristics in a drone: efficiency, durability, travel distance, and redundancy.

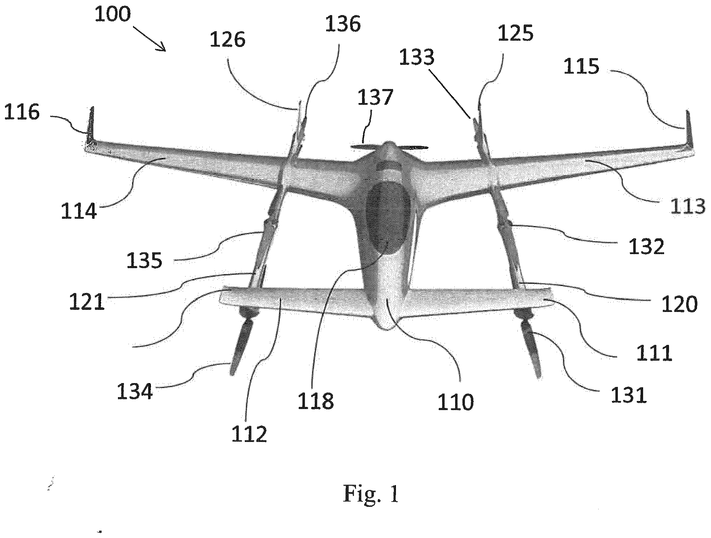

Referring now to FIG. 1, FIG. 1 generally depicts the basic structure of a hybrid VTOL Fixed-wing drone 100 in accordance with one aspect of the disclosure.

Drone 100 is contemplated to have a main body 110, two forewings 111, 112 attached to the front end of the main body 110. There are two main wings 113, 114 attached to the main body towards the rear of the main body 110. This is a typical canard design where two smaller forewings are placed forward to two larger main wings.

Main body 110 can have an aerodynamic design and may optionally have a cabin sufficiently large to seat human passenger(s) or cargo. In the exemplar drone 100 as shown in the drawing figures, what appears to be a windshield 118 may or may not be an actual functional windshield 118, depending on whether the particular embodiment has a passenger cabin.

There are two main wings 113 and 114 which can be attached to the rear portion of the main body 110. In some embodiments, terminal ends of each of the main wings 113 and 114 may have a vertical stabilizer 115, 116.

Forewings 111 and 112 can be attached to the front end of the main body 110. Forewings 111, 112 are shorter than the main wings 113, 114.

There are a left and a right linear supports 120, 121, each of which physically connects a forewing 111, 112 to the main wings 113, 114. The linear supports 120, 121 are fixed near the terminal ends of each perspective forewings 111, 112. In one embodiment, the linear supports 120, 121 can be fixedly attached at a location on the forewings 111, 112 that is distal to the middle point between the tip of the forewings 111, 112 and the main body 110. Although the exemplar linear supports 120, 121 shown in FIG. 1 are attached to the undersides of the forewings 111, 112, other embodiments may have the linear supports 120, 121attached to the upper side of the forewings 111, 112.

The contemplated linear supports 120, 121 can be made of suitable materials to withstand the physical demands of flying, and can resist contortion. Such materials include natural and synthetic polymers, various metals and metal alloys, naturally occurring materials, textile fibers, glass and ceramic materials, and all reasonable combinations thereof.

The straight linear supports 120, 121 can provide structural integrity to the drone 100 by minimizing a contortion force applied to the main body 110 by the up and down movement of the main wings 113, 114 and the forewings 111, 112 during flight.

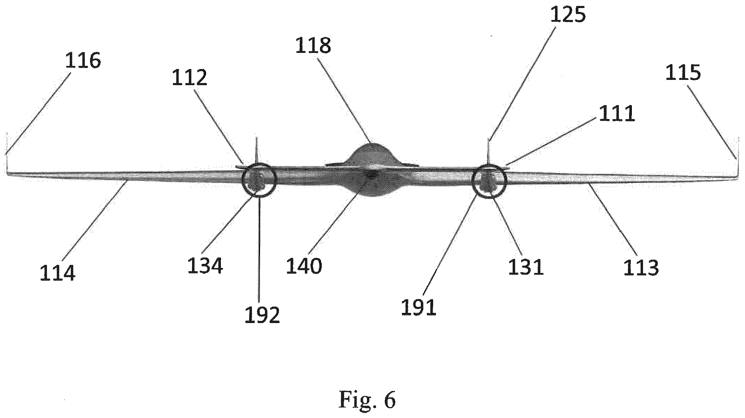

The linear supports 120, 121 can have a straight body and can be parallel to the longitudinal axis of the main body 110. As shown in the frontal view of FIG. 6, the straight body configuration allows minimum aerodynamic obstruction during flight. The linear supports 120, 121 can have a thickness that is no thicker than the thickest part of the main wings 113, 114. The linear supports 120, 121 can have a cross-sectional shape that is circular, oval, square, rectangular, or any other suitable shape.

In other contemplated embodiments (not shown), the linear supports 120, 121 can have a curvature or other angles besides being straight.

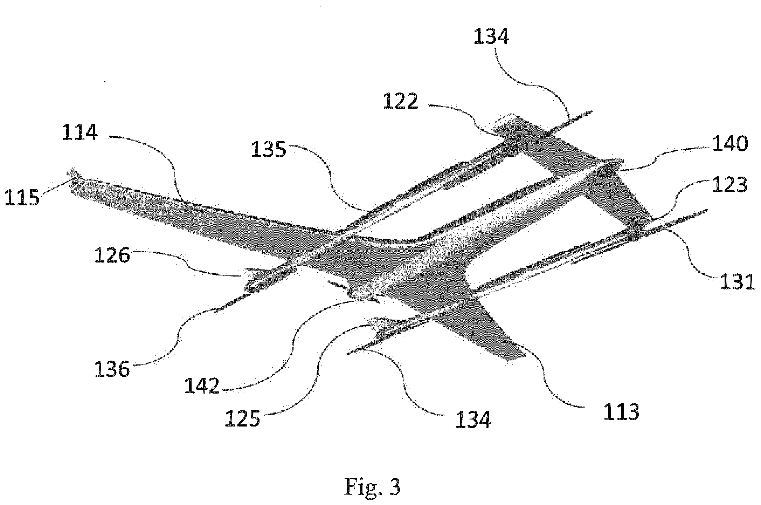

The left and right linear supports 120, 121 can have a suitable length to connect forewings 111, 112 to the main wings 113, 114. In the embodiment as shown in FIG. 3, the left and right linear supports 120, 121 are attached to the underside of the forewings 111, 112

In the exemplar drone 100 shown in the drawing figures, the left and the right linear supports 120, 121 each can have a vertical stabilizer 125, 126 disposed on the top of its rear terminal end. In one embodiment, the vertical stabilizers 125, 126 are at a 90 degree angle, perpendicular to the horizontal plane of the main wings. In other embodiments, these vertical stabilizers 125, 126 can be at a tilted angle.

It should be understood that the above-described angles are exemplary and any other angles can be adopted in various embodiments of this disclosure.

Referring now to FIG. 3, there are rotors and propellers disposed on each of the linear supports 120 and 121 to provide vertical take-off and landing capabilities to the drone 100. Various numbers of propellers are contemplated. Each linear support 120, 121 has three propellers. Left linear support 120 can have a propeller 131 disposed at the front terminal end of the linear support 120, on the underside of the left forewing 111, facing downwards. Left linear support 120 can have another propeller 132 disposed on top of the linear support 120 at a location in between the forewing 111 and the main wing 113, facing upwards. Left linear support 120 can have yet another propeller 133 disposed at the bottom of the linear support 120 near a rear terminal end, facing downwards.

Similarly on the right side of the drone 100, right linear support 121 can have a propeller 134 disposed at the front terminal end of the right linear support 121, on the underside of the right forewing 112, facing downwards. Right linear support 121 can have another propeller 135 disposed on top of the right linear support 121 at a location in between the forewing 112 and the main wing 114, facing upwards. Right linear support 121 can have yet another propeller 136 disposed at the bottom of the right linear support 121 near a rear terminal end, facing downwards.

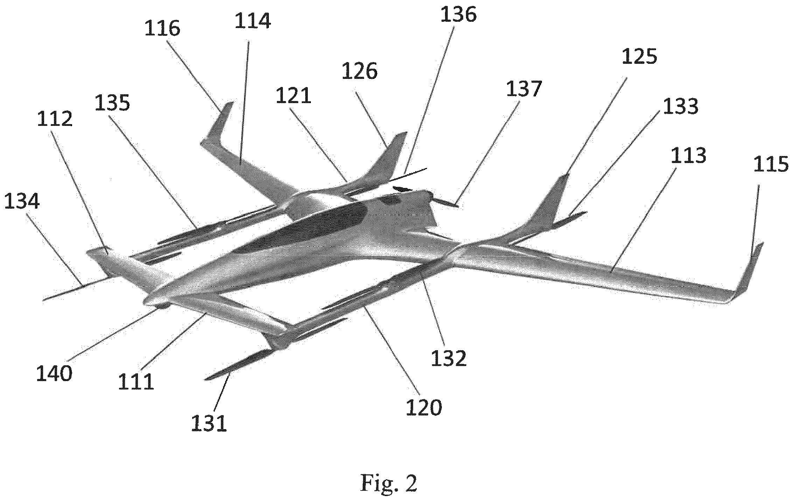

Each of the propellers 131, 132, 133, 134, 135, 136 shown in the drawing figures has two blades. In some embodiments, propellers 131, 132, 133, 134, 135, 136 can lock into a longitudinal position (as shown in FIGS. 1-4) during high speed flying when these propellers 131, 132, 133, 134, 135, 136 are not necessary to keep the drone 100 in air. By locking these propellers into a longitudinal position parallel to the direction of the flight, aerodynamic is improved, as opposed to not locking them or keeping them spinning.

As those of ordinary skill in the art will recognize, the propellers 131, 132, 133, 134, 135, 136 may readily be modified as dictated by the aesthetic or functional needs of particular applications. For example, each of all or some of the propellers 131, 132, 133, 134, 135, 136 can have 2-blades, 3-blades, 4-blades, or any other known types of blades.

As to the rotors that drive the propellers 131, 132, 133, 134, 135, 136, to maintain an aerodynamic profile, rotors should have as low a profile as possible. It is important to appreciate that although the present embodiment is particularly well suited for use by implementing a low-profile rotor, it should be understood that other types of rotor or combinations of different types of rotors can be used to perform that same function as the low-profile rotors.

As shown in FIG. 6, the contemplated rotors can be disposed within the linear supports 120, 121 and do not bulge out or extend beyond the aerodynamic contour of the linear supports 120, 121. Even the propellers 131, 132, 133, 134, 135, 136 can have a low-profile and can be disposed closely to the linear supports 120, 121 so that when the propellers 131, 132, 133, 134, 135, 136 are locked in a longitudinal position (as shown in FIG. 6) during high speed flying, an improved aerodynamic profile is present.

In one embodiment, the lowest portion of the propellers 131, 132, 133, 134, 135, 136 do not extend beyond the lowest part of the main body 110. In another embodiment, the highest portion of the propellers 131, 132, 133, 134, 135, 136 do not extend beyond the highest part of the main body 110. As shown in FIG. 6, form a frontal view, the distance between the highest points of the propellers 131, 132, 133, 134, 135, 136 to the lowest point of the propellers 131, 132, 133, 134, 135, 136 is substantially equal to the thickest part of the main wings 113, 114.

In yet another contemplated embodiment, a novel feature includes arranging multiple rotors/propellers in only two parallel columns such that from a frontal view, these multiple rotor/propellers create only two points 191, 192 of air disturbance (see FIG. 6). This is important because this design drastically improve the aerodynamic profile of a multicopter drone, or a VTOL drone.

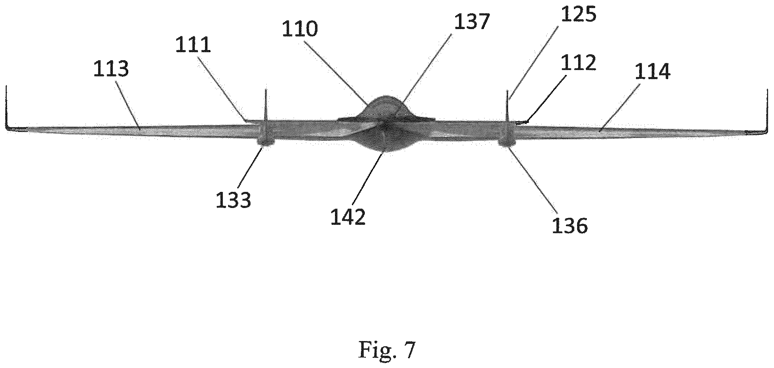

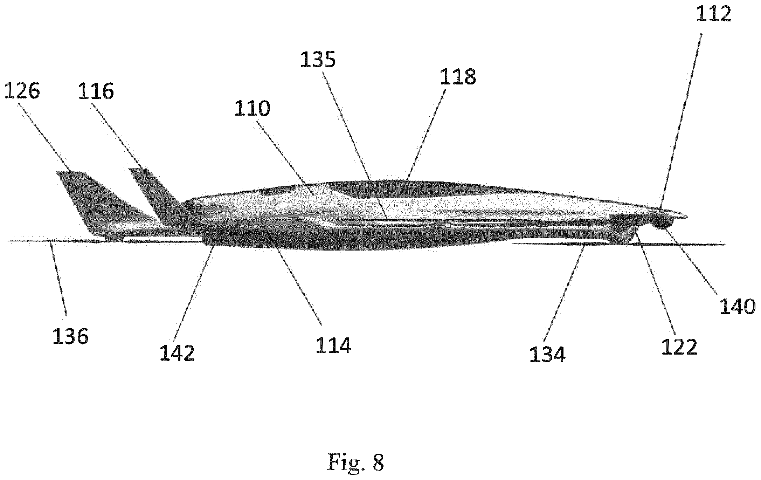

FIG. 8 illustrates one embodiment of how the six propellers 131, 132, 133, 134, 135, 136 can be arranged. In this embodiment, the six propellers 131, 132, 133, 134, 135, 136 are arranged in two columns parallel to each other. Each column can be parallel to the longitudinal axis of the main body 110. Known multi-copter drones arrange their propellers in an evenly spaced array to encircle around the center of gravity, because evenly spaced array in a circle provides the best stability and redundancy. When one propeller in such prior art multi-copter drone fails, the prior art multi-copter simply turns off another propeller on the opposite end of the circular array so the rest of the working propellers are balanced to keep the drone in the air. In the embodiment shown in FIGS. 1-5, the six propellers 131, 132, 133, 134, 135, 136 are not evenly spaced apart from an adjacent propeller. By having the six propellers 131, 132, 133, 134, 135, 136 arranged in two parallel columns, drag is minimized because the frontal profiles of all six propellers 131, 132, 133, 134, 135, 136 would only equal to the frontal profile of about two such propellers (see FIGS. 6 and 7).

It should be particularly appreciated that although the drawing figures only show six propellers 131, 132, 133, 134, 135, 136, any even numbers of propellers which is greater or equal to six can be arranged in two parallel columns. In one embodiment, the drone 100 can have two parallel columns of propellers, each column having two propellers. In another embodiment, the drone 100 can have two parallel columns of propellers, each column having four propellers. In yet another embodiment, the drone 100 can have two parallel columns of propellers, each column having five propellers.

This plurality of propellers 131, 132, 133, 134, 135, 136 may be disposed on various locations along the length of the linear supports 120, 121.

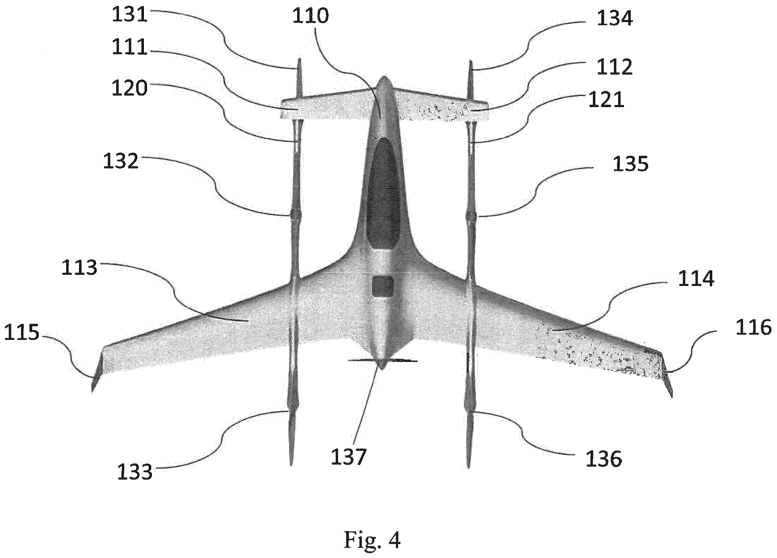

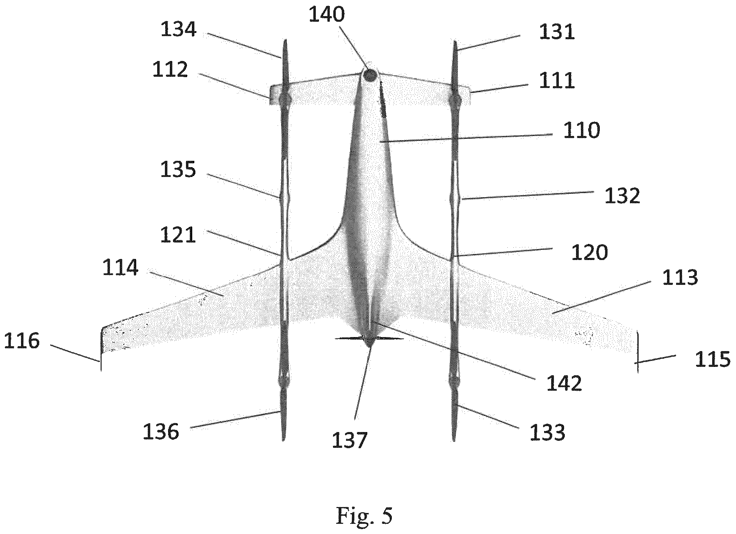

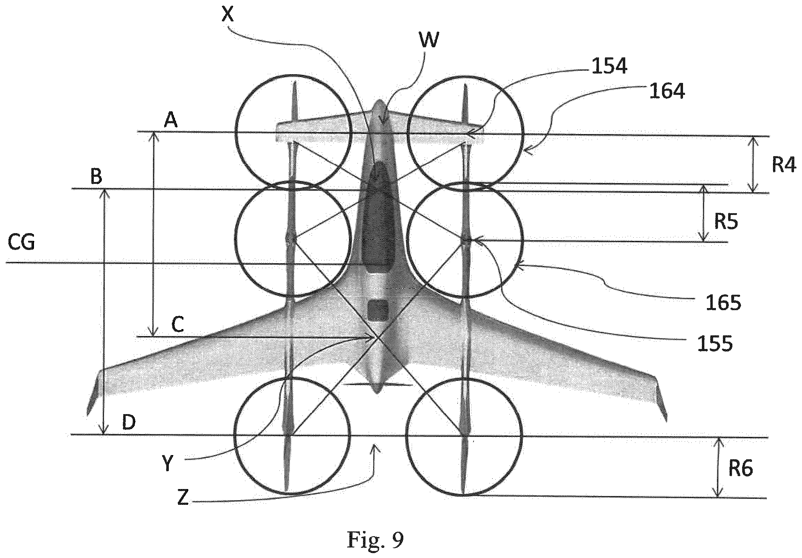

As shown in FIGS. 4 and 5, linear supports 120, 121 each has a rear terminal end that extends rearward beyond the rear edge of the main wings 113, 114. By extending its rear terminal end beyond the rear edge of the main wings 113, 114, the linear supports 120, 121 can have propellers 133, 136 disposed on their terminal end without having the main wings 113, 114 in the way of airflow during vertical takeoff and landing. As shown in FIG. 9, the two circles surrounding propellers 133, 136 represent the range of motion for their respective blades. Both circles do not overlap with the main wings 113, 114.

In the embodiments shown in the drawing figures, contemplated linear supports 120, 121 do not extend forward beyond the frontal edge of the forewings 111, 112. The embodiment shown in FIG. 3 has both linear supports 120, 121 terminate right underneath the forewings 111, 112. The terminal ends of the linear supports 120, 121 can each form a vertical ledge 122, 123.

In another embodiment (not shown), contemplated linear supports 120, 121 may each extend beyond the frontal edge of the forewings 111, 112. In that way, the two front-most propellers 131, 134 can operate without being interfered by the forewings 111, 112 being in the way of airflow.

In the embodiment shown in FIG. 9, high efficiency can be achieved by keeping the main body 110 and the linear supports 120, 121 reasonably short, thereby keeping the total weight of the drone relatively low. Instead of using smaller propellers 131, 132, 134, 135 in the first two rows of propeller arrangement so these two rows of propellers do not interfere with each other by overlapping their range motion, this embodiment can have the first rows' range of motion 164 overlap the second row's range of motion 165. In the embodiment of FIG. 9, each propeller in the first row can have a radius R4. Each propeller in the second row can have a radius R5. Each propeller in the last row can have a radius R6.

Although propellers with different length of blades (thereby a different range of motion radius) can be utilized, the embodiment in FIG. 9 has all six propellers 131, 132, 133, 134, 135, 136 having the same radius. In this embodiment, the distance between the center rotating axle 154 of propeller 134 to the center rotating axle 155 of propeller 135 is less than twice the radius R4.

From a top view, the ranges of motions 164, 165 appear to overlap each other partially. Their respective propeller blade, however, do not physically make contact with each other because these two propellers 134, 135 are disposed on opposite sides of the same linear support 121. All six propellers 131, 132, 133, 134, 135, 136 blow air in a downward fashion.

In one aspect of the disclosure, the contemplated drone 100 can have a push propeller 137 disposed on the rear end of the main body 110. The push propeller 137 has a spinning axle that is perpendicular to the spinning axles of propellers 131, 132, 133, 134, 135, 136. During high speed flight, the push propellers 137 is instrumental moving the drone 100, whereas all six propellers 131, 132, 133, 134, 135, 136 are locked and not rotating as described above.

Drone 100 can be equipped with other accessories, such as a camera 140 to conduct aerial surveillance and other date collection. Camera 140 can be disposed at any other position on the drone 100.

Contemplated drone 100 can optionally have one or more air diffusers disposed on the underside of the drone. As shown in FIG. 3, one air diffuser 142 can be disposed on the rear bottom end of the main body 110. The diffuser 142 can be a shaped section of the main body's underbody. In other embodiments, the air diffuser 142 may act as a deturbulator.

One aspect of the instant disclosure includes a contemplated method to arrange a spatial relationship between a center of gravity of a drone and at least three propellers disposed on each of the left and right side of the drone, whether or not these propellers are disposed on the linear supports. In some embodiments, these propellers are arranged in pairs, each pair being equal-distant to each other forming two parallel arrays. The intended objective is to keep the drone 100 reasonably light weight, to keep the drone aerodynamically enhanced, to have sufficient power to vertically takeoff without resorting to the biggest and strongest rotors, and to have a build-in redundancy such that when any one of the six or more propellers malfunctions, the drone may remain functioning by simply shutting down one other said propellers.

For example, when propeller 131 fails, the drone can turn off propeller 136 to still keep the drone balanced; when propeller 132 fails, the drone can turn off propeller 135 to still keep the drone balanced; when propeller 133 fails, the drone can turn off propeller 134 to still keep the drone balanced; and vise versa.

As illustrated in FIG. 6, the spatial arrangement of the propellers 131, 132, 133, 134, 135, 136 between each other and to the center of gravity of the drone can be done by the following method. In one example, consider that each of the six propellers 131, 132, 133, 134, 135, 136 have the same output of 1kg. Propellers 131 and 134 would have a center of lift force (2kg) at point W (line A), which is a point equal-distant to the center of propeller 131 and propeller 134. Propellers 131, 132, 134 and 135 would have a center of lift force (4kg) at point X (line B), which is a point equal-distant to the center of propellers 131, 132, 134 and 135. Propellers 132, 133, 135 and 136 would have a center of lift force (4kg) at point Y (line C), which is a point equal-distant to the center of propellers 132, 133, 135 and 136. Propellers 133 and 136 would have a center of lift force (2kg) at point Z (line D), which is a point equal-distant to the center of propellers 133 and 136. The contemplated center of gravity for the entire drone 100 can be line CG which is two third the distance from line A to line C, which is also one third the distance from line B to line D.

The above disclosed embodiments can be made of all known suitable natural or synthetic materials or a mixture of materials. Additionally, it should be appreciated that the materials contemplated herein may be derivatized in numerous manners.

Additionally, although flaps, ailerons, rudders, and elevators are not specifically discussed in this disclosure, each of them can be used in any of the disclosed embodiments.

## Claims

1. A fixed-wing drone comprising:
a main body (110);
a left main wing (113) and a right main wing (114);
a left forewing (111) and a right forewing (112), which are shorter than the left main wing (113) and the right main wing (114);
a left linear support (120), which physically connects.the left forewing (111) to the left main wing (113) and which is fixed near a left terminal end of the left forewing (111);
a rear terminal end of the left linear support (120) extends rearward beyond a rear edge of the left main wing (113);
a right linear support (121), which physically connects the right forewing (112) to the right main wing (114) and which is fixed near a right terminal end of the right forewing (112);
a rear terminal end of the right linear support (121) extends rearward beyond a rear edge of the right main wing (114);
a left linear alignment of propellers having a first propeller (131), a second propeller (132), and a third propeller (133);
a right linear alignment of propellers having a fourth propeller (134), a fifth propeller (135), and a sixth propeller (136);
wherein the left linear alignment is parallel to the right linear alignment, the first propeller (131), the second propeller (132), and the third propeller (133) are directly disposed linearly in a straight line on the left linear support (120), wherein the straight line is parallel to a longitudinal axis of the main body (110),
the first propeller (131) is disposed at the front terminal end of the left linear support (120),
the third propeller (133) is disposed at the rear terminal end of the left linear support (120),
the fourth propeller (134) is disposed at the front terminal end of the right linear support (121), and
the sixth propeller (136) is disposed at the rear terminal end of the right linear support (121),
**characterized in that**,
the left linear support (120) is fixed at a front terminal end near the left terminal end of the left forewing (111),
the right linear support (121) is fixed at a front terminal end near the right terminal end of the right forewing (112), and
the first propeller (131) and the second propeller (132) are disposed on opposing sides of the left linear support (120).

2. The fixed-wing drone as recited in claim 1 further comprising a seventh propeller (137) coupled to the main body (110) and has a plane of motion that is perpendicular to a plane of motion of the first propeller (131).

3. The fixed-wing drone as recited in claim 1 further comprising a left vertical stabilizer (125) disposed on a back end of the left linear support (120), and a right vertical stabilizer (126) disposed on a back end of the right linear support (121).

4. The fixed-wing drone as recited in claim 1, wherein from a top view, a range of motion (164) of the first propeller (131) visually overlaps with a range of motion (165) of the second propeller (132).

## Patentansprüche

1. Starrflügel-Drohne, die Folgendes umfasst:
einen Hauptkörper (110);
einen linken Hauptflügel (113) und einen rechten Hauptflügel (114);
einen linken Vorderflügel (111) und einen rechten Vorderflügel (112), die kürzer als der linke Hauptflügel (113) und der rechte Hauptflügel (114) sind;
einen linken geradlinigen Träger (120), der den linken Vorderflügel (111) mit dem linken Hauptflügel (113) physikalisch verbindet und der an einem vorderen Abschlussende in der Nähe eines linken Abschlussendes des linken Vorderflügels (111) arretiert ist;
wobei sich ein hinteres Abschlussende des linken geradlinigen Trägers (120) über eine Hinterkante des linken Hauptflügels (113) hinaus nach hinten erstreckt;
einen rechten geradlinigen Träger (121), der den rechten Vorderflügel (112) mit dem rechten Hauptflügel (114) physikalisch verbindet und der an einem vorderen Abschlussende in der Nähe eines rechten Abschlussendes des rechten Vorderflügels (112) arretiert ist;
wobei sich ein hinteres Abschlussende des rechten geradlinigen Trägers (121) über eine Hinterkante des rechten Hauptflügels (114) hinaus nach hinten erstreckt;
eine linke geradlinige Anordnung von Propellern, die einen ersten Propeller (131), einen zweiten Propeller (132) und einen dritten Propeller (133) aufweist;
eine rechte geradlinige Anordnung von Propellern, die einen vierten Propeller (134), einen fünften Propeller (135) und einen sechsten Propeller (136) aufweist;
wobei die linke geradlinige Anordnung zur rechten geradlinigen Anordnung parallel ist, der erste Propeller (131), der zweite Propeller (132) und der dritte Propeller (133) geradlinig auf einer geraden Linie direkt auf dem linken geradlinigen Träger (120) angeordnet sind, wobei die gerade Linie zu einer Längsachse des Hauptkörpers (110) parallel ist,
der erste Propeller (131) am vorderen Abschlussende des linken geradlinigen Trägers (120) angeordnet ist und nach unten orientiert ist,
der dritte Propeller (133) am hinteren Abschlussende des linken geradlinigen Trägers (120) angeordnet ist und nach unten orientiert ist,
der vierte Propeller (134) am vorderen Abschlussende des rechten geradlinigen Trägers (121) angeordnet ist und nach unten orientiert ist,
der sechste Propeller (136) am hinteren Abschlussende des rechten geradlinigen Trägers (121) angeordnet ist und nach unten orientiert ist,
**dadurch gekennzeichnet, dass**
der linke geradlinige Träger (120) an einem vorderen Abschlussende in der Nähe des linken Abschlussendes des linken Vorderflügels (111) befestigt ist,
der rechte geradlinige Träger (121) an einem vorderen Abschlussende in der Nähe des rechten Abschlussendes des rechten Vorderflügels (112) befestigt ist und
der erste Propeller (131) und der zweite Propeller (132) auf gegenüberliegenden Seiten des linken geradlinigen Trägers (120) angeordnet sind.

2. Starrflügel-Drohne nach Anspruch 1, die ferner einen siebten Propeller (137), der mit dem Hauptkörper (110) gekoppelt ist und eine Bewegungsebene aufweist, die zu einer Bewegungsebene des ersten Propellers (131) senkrecht ist, umfasst.

3. Starrflügel-Drohne nach Anspruch 1, die ferner einen linken vertikalen Stabilisator (125), der auf einem hinteren Ende des linken geradlinigen Trägers (120) angeordnet ist, und einen rechten vertikalen Stabilisator (126), der auf einem hinteren Ende des rechten geradlinigen Trägers (121) angeordnet ist, umfasst.

4. Starrflügel-Drohne nach Anspruch 1, wobei ein Bewegungsbereich (164) des ersten Propellers (131) in einer Draufsicht mit einem Bewegungsbereich (165) des zweiten Propellers (132) visuell überlappt.

## Revendications

1. Drone à voilure fixe comprenant :
un corps principal (110) ;
une voilure principale de gauche (113) et une voilure principale de droite (114) ;
une voilure avant de gauche (111) et une voilure avant de droite (112), qui sont plus courtes que la voilure principale de gauche (113) et la voilure principale de droite (114) ;
un support linéaire de gauche (120), qui connecte physiquement la voilure avant de gauche (111) à la voilure principale de gauche (113) et qui est fixé près d'une extrémité terminale de gauche de la voilure avant de gauche (111) ;
une extrémité terminale arrière du support linéaire de gauche (120) s'étend vers l'arrière au-delà d'un bord arrière de la voilure principale de gauche (113) ;
un support linéaire de droite (121), qui connecte physiquement la voilure avant de droite (112) à la voilure principale de droite (114) et qui est fixé près d'une extrémité terminale de droite de la voilure avant de droite (112) ;
une extrémité terminale arrière du support linéaire de droite (121) s'étend vers l'arrière au-delà d'un bord arrière de la voilure principale de droite (114) ;
un alignement linéaire de gauche de propulseurs ayant un premier propulseur (131), un deuxième propulseur (132) et un troisième propulseur (133) ;
un alignement linéaire de droite de propulseurs ayant un quatrième propulseur (134), un cinquième propulseur (135) et un sixième propulseur (136) ;
dans lequel l'alignement linéaire de gauche est parallèle à l'alignement linéaire de droite, le premier propulseur (131), le deuxième propulseur (132) et le troisième propulseur (133) sont directement disposés linéairement dans une ligne droite sur le support linéaire de gauche (120), dans lequel la ligne droite est parallèle à un axe longitudinal du corps principal (110),
le premier propulseur (131) est disposé au niveau de l'extrémité terminale avant du support linéaire de gauche (120),
le troisième propulseur (133) est disposé au niveau de l'extrémité terminale arrière du support linéaire de gauche (120),
le quatrième propulseur (134) est disposé au niveau de l'extrémité terminale avant du support linéaire de droite (121), et
le sixième propulseur (136) est disposé au niveau de l'extrémité terminale arrière du support linéaire droite (121),
**caractérisé en ce que**
le support linéaire de gauche (120) est fixé au niveau d'une extrémité terminale avant près de l'extrémité terminale de gauche de la voilure avant de gauche (111),
le support linéaire de droite (121) est fixé au niveau d'une extrémité terminale avant près de l'extrémité terminale de droite de la voilure avant de droite (112), et
le premier propulseur (131) et le deuxième propulseur (132) sont disposés sur des côtés opposés du support linéaire de gauche (120).

2. Drone à voilure fixe selon la revendication 1, comprenant en outre un septième propulseur (137) couplé au corps principal (110) et ayant un plan de déplacement qui est perpendiculaire à un plan de déplacement du premier propulseur (131).

3. Drone à voilure fixe selon la revendication 1, comprenant en outre un stabilisateur vertical de gauche (125) disposé sur une extrémité arrière du support linéaire de gauche (120), et un stabilisateur vertical de droite (126) disposé sur une extrémité arrière du support linéaire de droite (121).

4. Drone à voilure fixe selon la revendication 1, dans lequel, depuis une vue de dessus, une plage de déplacement (164) du premier propulseur (131) est visuellement en chevauchement avec une plage de déplacement (165) du deuxième propulseur (132).
